# FASCICULE DE BREVET EUROPEEN

(11) **EP 2 952 851 B1**
(45) Date de publication et mention de la délivrance du brevet: **07.03.2018**
(21) Numéro de dépôt: 15020061.6
(22) Date de dépôt: 24.04.2015
(51) Int. Cl.: G01C 11/02, G03B 35/02, G03B 35/08, H04N 13/02, G03B 15/02, G03B 35/00, H04N 13/00

(54) **DISPOSITIF POUR LA RECONSTRUCTION D'UNE PAIRE D'IMAGES EN STÉRÉOPHOTOGRAMMÉTRIE**
VORRICHTUNG ZUR REKONSTRUKTION EINES BILDPAARES MIT STEREOFOTOGRAMMETRIE
DEVICE FOR RECONSTRUCTING A STEREOPHOTOGRAMMETRY IMAGE PAIR

(30) Priorité: 04.06.2014 FR 1401282
(43) Date de publication de la demande: 09.12.2015
(73) Titulaire: QuantifiCare S.A., 06560 Valbonne (FR)
(72) Inventeur: Thirion, Jean-Philippe, 06560 Valbone (FR); Plassmann, Peter, Pontypridd, Mid Glamorgan CF37 1DL (GB)

(56) Documents cités:
- GB-A- 2 468 138
- JP-A- 2001 290 227
- US-A- 3 891 313
- US-A- 4 911 530
- HANS SKVARA ET AL: "Quantification of skin lesions with a 3D stereovision camera system: validation and clinical applications", SKIN RESEARCH AND TECHNOLOGY, vol. 19, no. 1, 20 février 2013 (2013-02-20), pages e182-e190, XP055139368, ISSN: 0909-752X, DOI: 10.1111/j.1600-0846.2012.00625.x
- "Exhibition Watch Report - In-Cosmetics 2013", , 2013, XP055139703, Paris Extrait de l'Internet: URL:http://www.veillesalon.com/rapports-do c/In-Cosmetics/Rapport_In-Cosmetics-2013.p df [extrait le 2014-09-11]
- "The Holga Manual", , 2011, pages 1-39, XP055140095, Extrait de l'Internet: URL:https://www.freestylephoto.biz/pdf/hol ga-manual.pdf [extrait le 2014-09-15]

## Description

La présente invention concerne le domaine de la reconstruction de surfaces en trois dimensions à partir d'une paire d'images acquise par stéréophotogrammétrie, appelée paire stéréo.

Chaque image de la paire stéréo est acquise suivant un angle de vue différent. Le cerveau humain possède la capacité d'interpréter cette paire stéréo et de reconstruire mentalement la troisième dimension.

La technique de stéréophotogrammétrie par photographie argentique ou numérique a été utilisée abondamment par les cartographes dans le cadre des relevés topographiques établis à partir de vues aériennes. C'est ainsi que les cartographes reconstituent les lignes de niveau qui permettent le tracé du relief sur les cartes. La stéréophotogrammétrie a été utilisée ensuite pour de nombreuses applications, dont la reconstruction en trois dimensions d'objets industriels ou encore la reconstruction de la surface de la peau pour des applications cosmétiques ou médicales.

L'arrivée des ordinateurs et de la numérisation des photographies a autorisé le développement du traitement d'images numériques. Parmi les premières applications du traitement d'images numériques se trouve la reconstruction semi-automatique ou automatique de surfaces en trois dimensions à partir d'une paire stéréo. L'ouvrage « Photogrammetry 1. Fundamentals and standard processes », 4ième édition, de Karl Kraus et Peter Waldhäusl, aux éditions Bonn Dümmler, 1993, et traduit en français par Pierre Grussenmeyer et O. Reis sous le nom de « Manuel de photogrammétrie, principes et procédés fondamentaux » aux éditions Hermes, 1998, est un excellent livre d'introduction décrivant les principes de la reconstruction 3D en stéréophotogrammétrie par ordinateur.

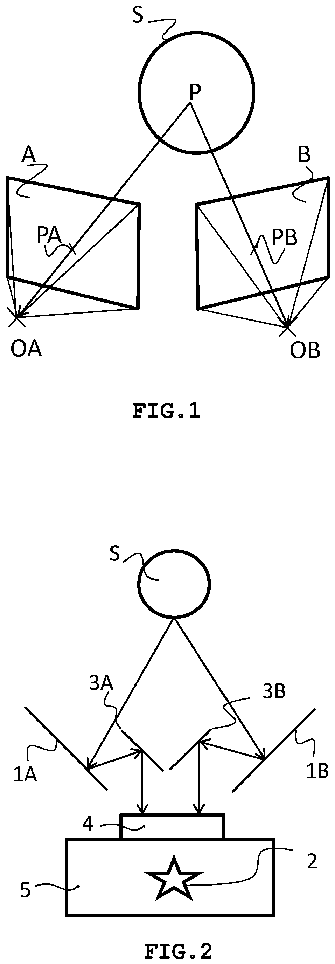

Le principe, illustré par la figure 1 fournie en annexe, est de mesurer précisément les caractéristiques géométriques et de modéliser les objectifs (OA) et (OB) ayant permis l'acquisition des deux images de la paire stéréo. Cette étape est appelée calibration. Les optiques étant calibrées, reconnaitre la position (PA) et (PB) dans chacune des deux images (A) et (B) d'un même point physique (P) de la surface du sujet (S) définit précisément deux lignes dans l'espace qui ont pour intersection le point (P) de la surface du sujet.

La reconstruction stéréoscopique par ordinateur s'effectue donc suivant deux grands principes : la connaissance de la géométrie des systèmes d'acquisition par calibration et l'identification de points communs entre les deux images de la paire stéréo. Une manière habituelle d'identifier un point dans les deux images est l'utilisation de la corrélation d'images qui est maximale quand on compare une fenêtre autour de l'image d'un même point dans les deux images de la paire stéréo.

Afin de rendre compact le système d'acquisition d'images en stéréophotogrammétrie, des dispositifs ont été développés pour permettre de prendre les deux images de la paire stéréo avec un appareil photographique unique au lieu de disposer de deux appareils photographiques indépendants.

Une première façon de réaliser un système de stéréophotogrammétrie compact est illustré par la figure 2 fournie en annexe. Le système comprend un appareil photographique unique (5) et un séparateur d'images à base de miroirs et permettant de séparer en deux l'image qui arrive sur le système optique. Pour se faire, l'homme de l'art utilise en général deux miroirs extérieurs (1A) et (1B), appelés « miroirs secondaires », espacés de la distance approximative des yeux humains et deux miroirs intérieurs (3A) et (3B), opposés aux premiers, appelés « miroirs primaires » et qui renvoient ensuite l'image sur un système optique (4). La lumière naturelle étant généralement insuffisante pour les besoins photographiques, on utilise une source lumineuse puissante (2), placée sur l'appareil photographique.

Un tel système, constitué d'un appareil photographique, d'un flash unique et d'un séparateur d'images a été mis au point par l'un des auteurs et décrit dans la publication « MAVIS: a non-invasive instrument to measure area and volume of wounds. Measurement of Area and Volume Instrument System.», Plassmann P, Jones TD, Med Eng Phys 1998;20(5):332-8. La figure 2 en annexe décrit un mécanisme basé sur un séparateur d'images proche du système proposé par les auteurs de cette publication.

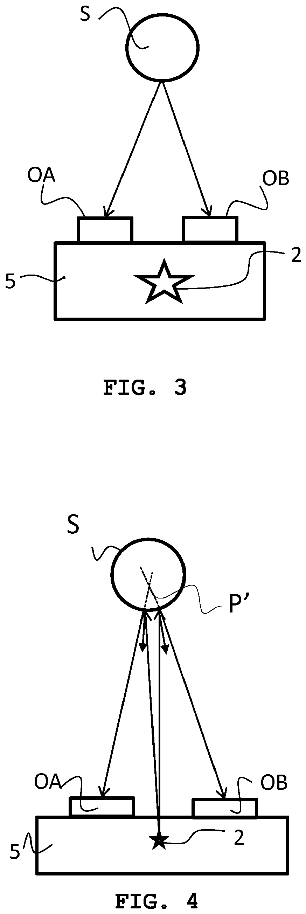

Une autre manière de réaliser un système de stéréophotographie comprenant un appareil photographique unique est d'utiliser un jeu de lentilles indépendant pour chacune des deux images. Un tel système, constitué d'un appareil photographique, d'un flash unique et de deux optiques indépendantes a été mis au point par la société FUJI et diffusé commercialement sous le nom de FUJI FinePix 3D W3. La figure 3 en annexe décrit un mécanisme basé sur deux systèmes de lentilles distincts, où (S) est le sujet examiné, (5) est l'appareil photographique, (OA) et (OB) les deux optiques indépendantes et (2) le flash unique.

Ces systèmes construits sur un appareil unique donnent généralement de bons résultats de reconstruction en 3D sauf si la surface examinée reflète trop fortement la lumière du flash à cause d'un phénomène appelé « reflet spéculaire ».

En effet, une surface physique possède deux manières principales de renvoyer la lumière : la diffusion d'une part et la réflexion spéculaire de l'autre. La diffusion consiste à renvoyer la lumière reçue de façon uniforme dans l'espace quel que soit l'angle d'incidence. La diffusion est le propre des surfaces mates. La seconde manière de renvoyer la lumière est de la réfléchir comme le fait un miroir, avec un angle de réflexion identique à l'angle d'incidence sur la surface, suivant la loi de Snell-Descartes pour la réflexion. Cette réflexion miroir est caractéristique du reflet spéculaire et des surfaces brillantes. La réflexion d'une source lumineuse sur un objet réfléchissant est appelée tache spéculaire car la source lumineuse présente toujours une certaine extension et les propriétés de la surface réfléchissante concentrent également plus ou moins cette luminosité dans la direction réfléchie.

Ce phénomène de réflexion spéculaire crée un problème pour les algorithmes de reconstruction de surfaces 3D, car la tache spéculaire vue par chacune des deux optiques se retrouve décalée entre l'image de gauche et l'image de droite de telle manière à faire croire à la méthode d'identification de points que la tache se retrouve non pas sur la surface à reconstruire, mais à une distance plus éloignée de la surface à reconstruire.

Dans le cas d'une surface courbe convexe, la tache spéculaire reconstruite se retrouve à l'emplacement virtuel du flash reflété par la surface réfléchissante. Il se situe entre la surface et jusqu'au double de la distance entre surface et le flash en fonction de la courbure de la surface. Ainsi, le point identifié comme ayant la corrélation maximale se trouve être l'image miroir du flash sur la surface réfléchissante, créant sur la surface reconstruite un pic artificiel vers l'arrière de la surface à l'endroit de la tache spéculaire.

La figure 4, fournie en annexe, décrit géométriquement ce phénomène dans le cas d'un objet réfléchissant de forme convexe telle qu'une sphère et de l'utilisation d'un mécanisme de stéréophotogrammétrie basé sur un appareil photographique unique (5) muni d'une source lumineuse unique (2) et d'une double optique (OA) et (OB). La source lumineuse (2) produit un reflet spéculaire vu à des positions différentes sur la surface de la sphère par l'optique (OA) et par l'optique (OB), ce qui crée un déplacement de l'estimation de la surface estimée (P') vers l'arrière de la scène et non sur la surface du sujet (S) examiné.

Une manière de réduire l'effet spéculaire est l'utilisation d'un verre dépoli sur le flash, ce qui permet de rendre la tache spéculaire plus large et plus diffuse. Cependant, sauf à réduire totalement l'intensité du flash, cette tache, bien qu'atténuée, reste tout de même présente dans la réflexion miroir et est susceptible de créer un artefact de reconstruction.

Une autre manière est d'utiliser le principe de la polarisation croisée. La polarisation agit à la manière d'un peigne sur la lumière. Si l'on tient deux peignes de manière parallèle l'un devant l'autre, on voit entre les dents des deux peignes. Par contre, si l'on tient les deux peignes de manière perpendiculaire, on ne peut pratiquement plus voir au travers. La réflexion diffuse est insensible à la polarisation alors que la réflexion spéculaire renvoie la lumière avec la même direction de polarisation que la lumière incidente. En utilisant un filtre polarisant directionnel sur le flash et un filtre polarisant ayant une orientation perpendiculaire à cette direction sur les deux optiques, on élimine pratiquement tout reflet spéculaire dans les images de la paire stéréo. Cette technique de polarisation croisée a notamment été utilisée par les auteurs dans une version précédente du système. Malheureusement, la polarisation croisée enlève énormément de luminosité à l'image et rend les images de peau très éloignées de la perception humaine en faisant ressortir fortement les rougeurs de la peau. Une autre manière d'éviter ce problème, toujours en reposant sur la polarisation et mise au point par les auteurs, consiste à utiliser une polarisation croisée « inverse » entre les flashs et les optiques, de telle façon que le flash gauche éclaire l'optique droite et que le flash droit éclaire l'optique gauche, ainsi qu'il est décrit dans le dépôt de brevet anglais GB 2 468 138 A (UGSC [GB]) du 1^{er} septembre 2010 (2010-09-01). Ce principe de polarisation croisée a été repris dans la camera 3D LifeViz, telle que présentée dans HANS SKVARA ET AL : « Quantifition of Skin Lésions with 3D stereovision camera system : validation and clinical applications », SKIN RESEARCH AND TECHNOLOGY, vol 19, N°1, 20 février 2013 (2013-02-20), pages e182-e190, XP055139368, ISSN : 0909-752X, DOI :10.1111/j.1600-0846.2012.00625.x, ainsi que dans la camera 3D LifeViz II telle que décrite par exemple dans le rapport « Exibition Watch Report - In-Cosmetics 2013», 2013, XP055139703, Paris, page 8 et 9. Tous ces systèmes décrits réduisent les artefacts dus à la tache spéculaire mais diminuent fortement la luminosité des images à cause de la polarisation ce qui n'est pas désirable.

Enfin, un nombre très réduit d'autres appareils de stéréophotogrammétrie font apparaitre deux flashs séparés dans le but, non pas de réduire des artefacts de reconstruction dus aux reflets spéculaires, mais dans celui de réduire les ombres portées sur le sujet examiné. Il s'agit par exemple de l'appareil décrit dans le brevet Japonais JP 2001 290227 A (MINOLTA CO LTD) 19 octobre 2001 (2001-10-19) ou encore de l'appareil « Holga » comme décrit dans « The Holga Manual », 2011, pages 1-39, XP055140095. Les appareils décrits ne sont pas munis de moyens de calcul permettant la reconstruction de surface et donc à fortiori pas de l'adaptation permettant d'exploiter un dédoublement du flash pour réduire l'effet de la tache spéculaire.

Le principe de la présente invention est d'avoir découvert que remplacer la source lumineuse unique de l'appareil photographique par deux sources lumineuses séparées du même écartement que les deux optiques de l'optique double sans polarisation, alignées sur ces deux optiques et utilisant une technique de reconstruction de surface adaptée conduit à réduire les artefacts de reconstruction de surfaces liés aux reflets spéculaires des sources lumineuses.

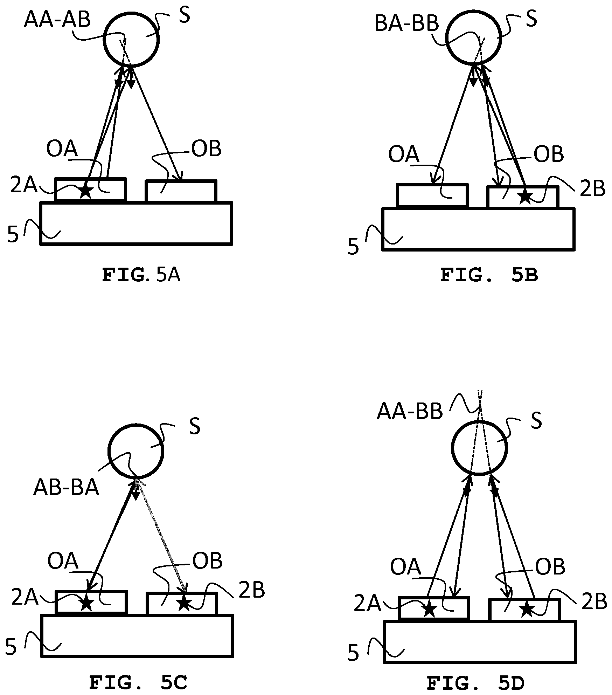

En effet, le fait de disposer de ces deux sources selon l'invention crée 4 positions virtuelles pour la reconstruction d'un point spéculaire en 3 dimensions. Les figures 5A, 5B, 5C et 5D illustrent ces quatre positions.

Dans les figures 5A, 5B, 5C et 5D, (S) est le sujet examiné, (OA) et (OB) sont les deux optiques de l'optique double, (2A) et (2B) sont les deux sources lumineuses, avec (2A) aligné avec l'optique (OA) et (2B) aligné avec l'optique (2B) et (5) est l'appareil photographique unique.

La figure 5A montre le point (AA-AB) reconstruit en utilisant l'image de la source lumineuse (2A) telle que vue par les optique (OA) et (OB).

La figure 5B montre le point (BA-BB) reconstruit en utilisant l'image de la source lumineuse (2B) telle que vue par les optique (OA) et (OB).

La figure 5C montre le point (AB-BA) reconstruit en utilisant l'image de la source lumineuse (2A) vue par l'optique (OB) et l'image de la source lumineuse (2B) telle que vue par l'optique (OA).

La figure 5D montre le point (AA-BB) reconstruit en utilisant l'image de la source lumineuse (2A) vue par l'optique (OA) et l'image de la source lumineuse (2B) telle que vue par l'optique (OB).

Seule la configuration de la figure 5C conduit à la reconstruction d'un point (AB-BA) effectivement situé sur la surface du sujet (S) ou très proche de celle-ci. Pour réussir à reconstruire convenablement la surface 3D, il ne reste alors pour l'algorithme de reconstruction 3D qu'à choisir la bonne possibilité parmi les quatre possibilités de mises en correspondance possibles de points entre l'image A et l'image B, c'est-à-dire la possibilité (AB-BA) correspondant à la configuration de la figure 5C.

Une manière de réaliser cette sélection est de considérer parmi les quatre points de correspondance possibles pour une tache spéculaire le point le plus proche du dispositif dans le cas d'une surface convexe et le point le plus éloigné dans le cas d'une surface concave. Nos expériences ont montré que grâce à l'invention et de façon inattendue, de très bons résultats sont obtenus pour la reconstruction 3D de surfaces présentant des reflets spéculaires et ceci pour plusieurs méthodes différentes de mise en correspondance de points sans modifications spécifiques de ces méthodes sauf évidemment en ce qui concerne la sélection du point parmi les 4 solutions possibles sur les critères géométriques décrits précédemment.

Le dispositif selon l'invention a donc pour but d'améliorer les algorithmes de reconstruction de surface 3D en stéréophotogrammétrie en réduisant les artefacts de reconstruction dus aux reflets spéculaires sur les surfaces examinées.

Il comprend en effet des moyens de calcul permettant la reconstruction de surface par une recherche de points correspondants dans chacune des deux images d'une paire stéréo et un appareil photographique numérique unique muni d'une optique double sans polarisation et de deux sources lumineuses séparées, possédant le même écartement que l'optique double et placées en alignement avec l'optique double par rapport au sujet.

L'alignement s'entend dans le sens ou si les deux optiques de l'optique double sont séparées suivant un axe donné, l'alignement entre la source lumineuse et l'optique correspondante se fait suivant l'axe perpendiculaire à l'axe des deux optiques. Ainsi, si l'axe de séparation des deux optiques est horizontal comme dans le cas de la vision humaine, l'alignement de chaque source lumineuse avec l'optique correspondante se fait de manière verticale. Les deux sources lumineuses sont placées de la manière la plus proche possible de l'optique double, tout en évitant les ombres portées par les sources lumineuses vis-à-vis de l'appareil lui-même sur le sujet et en évitant également un éclairage direct de l'intérieur des optiques par les sources lumineuses.

Les moyens de calcul sont tels qu'ils permettent de choisir parmi quatre possibilités d'appariement possibles la solution d'appariement la plus proche du dispositif pour une surface convexe et la solution la plus éloignée pour une surface concave.

Selon des modes particuliers de réalisation :
- Les deux sources lumineuses peuvent être placées indifféremment toutes les deux au-dessus ou toutes les deux au-dessous de l'optique double sans changer la nature de l'invention.
- L'optique double peut être réalisée au moyen d'un jeu de miroirs.
- L'optique double peut être réalisée au moyen de deux jeux de lentilles indépendants.
- L'image de chaque optique peut être recueillie au moyen d'une surface photosensible unique ou de deux surfaces photosensibles séparées.
- Les deux sources lumineuses sont réalisées au moyen d'une source lumineuse unique et d'un jeu de miroirs.
- Les deux sources lumineuses peuvent être légèrement déplacées pour des raisons de construction de l'appareil photographique et d'illumination parasite dans les deux optiques générées par les deux sources lumineuses, tout en restant alignées avec l'optique correspondante par rapport au sujet examiné.

Les dessins annexés des figures 1 à 4 servent à comprendre l'état de l'art et illustrent le problème technique que l'on cherche à résoudre. Les figures 5A, 5B, 5C et 5D expliquent comment le problème technique est résolu par l'invention. Les figures 6, 7 et 9 illustrent des variantes de l'invention. Plus précisément :
La figure 1 présente le principe de la reconstruction stéréoscopique, bien connu de l'homme de l'art.
La figure 2 présente un appareil photographique unique muni d'une optique double réalisée à l'aide d'un jeu de miroirs et d'une source lumineuse unique, correspondant à l'état de l'art.
La figure 3 présente un appareil photographique unique muni d'une optique double réalisée à partir de deux optiques séparées et d'une source lumineuse unique, correspondant également à l'état de l'art.
La figure 4 présente le problème technique que l'on cherche à résoudre.
Les figure 5A, 5B, 5C et 5D permettent d'illustrer comment l'invention résout le problème technique.

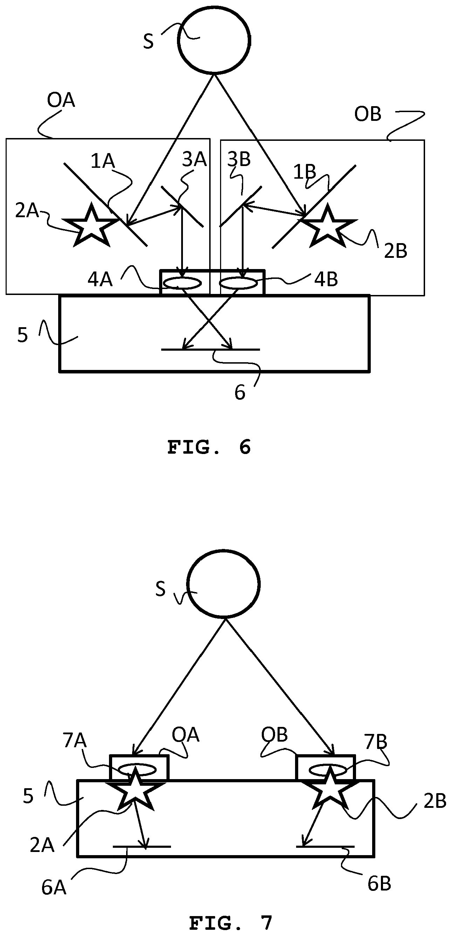

La figure 6 présente une variante de l'invention à l'aide de miroirs primaires et secondaires utilisés pour la fabrication de l'optique double.
La figure 7 présente une variante de l'invention à l'aide de deux optiques indépendantes.

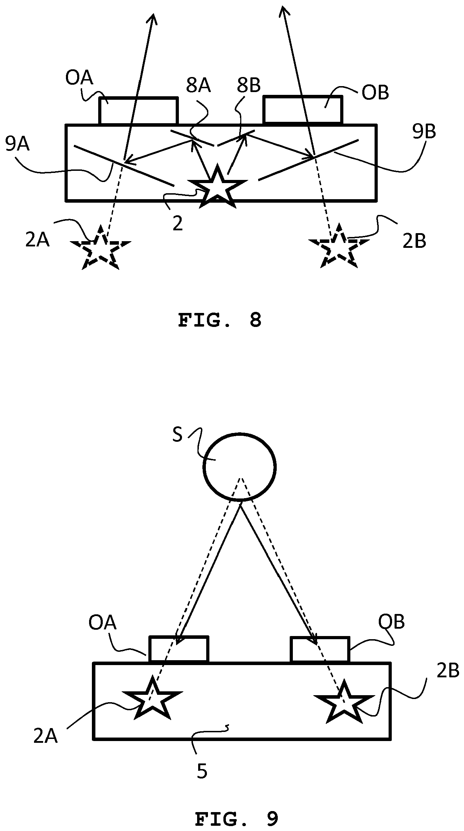

La figure 8 présente une réalisation de l'invention où les deux sources lumineuses indépendantes de l'invention sont réalisées à partir d'une seule source lumineuse et d'un jeu de miroirs.
La figure 9 présente une variante de l'invention une réalisation de l'invention où les sources lumineuses, bien que décalées par rapport aux deux optiques, restent dans l'alignement de l'optique et du sujet.
En référence à ces dessins et plus particulièrement la figure 9, le dispositif comporte des moyens de calcul (non représenté) permettant la reconstruction de surface par une recherche de points correspondants dans chacune des deux images d'une paire stéréo et d' un appareil photographique unique (5) et deux optiques (OA) et (OB) non polarisées surmontées respectivement par une source lumineuse (2A) et une source lumineuse (2B).

Ici, l'appareil photographique muni d'une optique double non polarisée doit se comprendre au sens large.

Une manière de réaliser l'invention consiste à construire le système d'optique double en utilisant un séparateur d'images réalisé au moyen de miroirs. La séparation peut être réalisée à l'aide de deux miroirs secondaires (1A) et (1B) placés latéralement et recevant chacun l'image du sujet et renvoyant l'image pour (1A) sur un miroir primaire (3A) et pour (1B) sur un miroir primaire (3B). Les miroirs primaires renvoient leur image sur une surface photosensible (6) au travers d'une combinaison de lentilles (4A) pour le miroir (3A) et d'une combinaison de lentilles (4B) pour le miroir (3B). Dans ce cas, l'optique (OA) est constituée essentiellement des miroirs (1A) et (3A) et du jeu de lentilles (4A) et l'optique (OB) est constituée essentiellement des miroirs (1B) et (3B) et du jeu de lentilles (4B). Dans cette variante, la source lumineuse (2A) est alignée verticalement avec le centre du miroir (1A) et la source lumineuse (2B) est alignée verticalement avec le miroir (1B). Une variante de l'invention consiste à remplacer les combinaisons de lentilles (4A) et (4B) par une seule combinaison de lentilles (4). La surface photosensible pourra elle-même être unique (6) ou bien constituée de deux surfaces photosensibles différentes (6A) et (6B) recevant chacune l'une des deux images de la paire stéréo.

Selon une autre variante de l'invention, l'optique double peut être constituée par deux jeux de lentilles indépendants (7A) et (7B) renvoyant directement chacun une image sur une surface photosensible (6) et ne nécessitant pas un jeu de miroir pour séparer les deux images de la paire stéréo. Le jeu de lentilles (7A) constitue alors l'essentiel de l'optique (OA) et le jeu de lentilles (7B) constitue l'essentiel de l'optique (OB). Dans cette variante, la source lumineuse (2A) est alignée verticalement avec le jeu de lentilles (7A) et la source lumineuse (2B) est alignée verticalement avec le jeu de lentilles (7B). Dans ce cas également, la surface photosensible (6) peut être unique ou bien constituée de deux surfaces photosensibles différentes (6A) et (6B) recevant chacune l'une des deux images de la paire stéréo. Une alternative à la solution proposée par l'invention consiste à éliminer physiquement les configurations (AA-AB), (BA-BB) et (AA-BB) des figures respectives 5A, 5B et 5D en faisant en sorte que la source lumineuse (2A) n'illumine que l'optique (OB) et que la source lumineuse (2B) n'illumine que l'optique (0A), suivant ainsi la configuration (AB-BA) de la figure 5C.

Une façon de réaliser cette alternative est de prendre les deux images de la paire stéréo de manière asynchrone, en utilisant dans un premier temps la source lumineuse (2A) pour prendre l'image uniquement avec l'optique (OB), puis dans un second temps en utilisant la source lumineuse (2B) pour prendre l'image uniquement avec l'optique (OA). Les alignements entre les sources lumineuses (2A) et (2B) et les optiques respective (OA) et (OB) sont approximatifs. En effet, plus l'objet est éloigné de l'appareil et moins les différences d'alignement entre source lumineuse et optique sont sensibles pour ce qui est de la précision de la surface reconstruite.

D'autres combinaisons que celles décrites dans les figures 6 et 7 sont possibles, comprenant par exemple un seul système de lentilles plutôt que deux dans le cas du séparateur d'images de la figure 6 ou comprenant par exemple une seule surface photosensible dans le cas de deux systèmes de lentilles séparés de la figure 7 sans que cela ne change la nature de l'invention. Le dispositif selon l'invention utilise un séparateur permettant de séparer la lumière émise par une seule source lumineuse physique (2) en deux sources virtuelles (2A) et (2B) ayant l'écartement requis. Un mécanisme pour réaliser ce séparateur consiste à utiliser un jeu de miroirs équivalent au jeu de miroirs utilisé pour séparer une image et placé cette fois devant la source lumineuse principale (2), comme illustré dans la figure 8. La lumière de la source lumineuse principale (2) se reflète alors sur des miroirs primaires (8A) et (8B) qui lui sont opposés, puis sur un jeu de miroirs secondaires (9A) et (9B) qui renvoie la lumière vers le sujet. A notre connaissance, il n'existe aucun système de stéréophotographie de ce type, c'est à dire constitué d'une optique double et d'un séparateur de lumière à base de miroirs permettant de définir deux sources lumineuses virtuelles écartées du même écartement que l'optique double, ce qui constitue en soi une invention permettant à la fois la réduction des problèmes d'ombrage sur une paire stéréo et la réduction des artéfacts dus aux reflets spéculaires et constitue une invention conduisant dans notre demande de dépôt à une revendication indépendante car ne nécessitant pas de moyens de calcul pour être mise en oeuvre.

Dans tous les cas des variantes de l'invention et dans le cas de l'invention, si les sources lumineuses ou les sources lumineuses virtuelles sont placées légèrement en arrière de l'optique double, il pourra être avantageux d'écarter les sources lumineuses ou les sources lumineuses virtuelles légèrement plus que l'écartement de l'optique double, afin que les deux axes d'alignement entre sources lumineuses et optiques convergent vers un point correspondant à la distance attendue du sujet (S). Il est à noter que ce placement n'a pas besoin d'être exact, car les deux sources lumineuses ont une certaine extension dans l'espace et la position attendue de l'objet est elle-même approximative. Pour une variante de l'invention cette optimisation du placement des sources lumineuses en fonction de l'écartement des deux optiques de l'optique double, de leur position dans l'espace et de la position attendue du sujet est illustrée par la figure 9 fournie

Le dispositif suivant l'invention est particulièrement destiner à acquérir des couples d'images en stéréophotogrammétrie pour la reconstruction de surfaces en trois dimensions.

## Revendications

1. Dispositif photographique pour la reconstruction de surfaces en trois dimensions à partir d'une paire stéréo d'images d'un sujet (S) en stéréophotogrammétrie, qui comprend
- des moyens de calcul permettant la reconstruction de surfaces par une recherche de points de correspondance entre chacune des deux images de la paire stéréo, et
- un appareil photographique unique (5) muni
-- d'un système d'optique double non polarisé (OA, OB) et
-- d'une source lumineuse unique dont la lumière est renvoyée par un jeu de miroirs primaires placés en opposition de la source lumineuse, renvoyant la lumière sur un jeu de miroirs secondaires placés en opposition avec le jeu de miroirs primaires et renvoyant eux-mêmes la lumière vers le sujet (S), créant ainsi
deux sources lumineuses virtuelles (2A, 2B) possédant le même écartement que l'optique double et placées en alignement avec cette optique double, de telle sorte qu'une première des sources lumineuses virtuelles (2A) soit alignée avec une première des optiques (OA) et qu'une deuxième des sources lumineuses (2B) soit alignée avec une deuxième des optiques (OB) par rapport au sujet (S),
les moyens de calcul étant configurés pour choisir parmi quatre solutions possibles d'appariement pour la reconstruction d'une tache spéculaire la position géométrique la plus proche de l'appareil photographique pour une surface convexe et la plus éloignée pour une surface concave, les quatre solutions comprenant : l'appariement du reflet de la première source lumineuse virtuelle (2A) vu par les optiques (OA) et (OB), l'appariement du reflet de la deuxième source lumineuse virtuelle (2B) vu par les optiques (OA) et (OB), l'appariement d'une part du reflet de la première source lumineuse virtuelle (2A) vu par la deuxième optique (OB) et d'autre part du reflet de la deuxième source lumineuse virtuelle (2B) vu par la première optique (OA), l'appariement d'une part du reflet de la première source lumineuse virtuelle (2A) vu par la première optique (OA) et d'autre part du reflet de la deuxième source lumineuse virtuelle (2B) vu par la deuxième optique (OB).

2. Dispositif selon la revendication précédente, dans lequel les deux sources lumineuses virtuelles (2A, 2B) sont placées respectivement juste au-dessus de l'optique double (OA, OB).

3. Dispositif selon la revendication 1, tel que les deux sources lumineuses virtuelles (2A, 2B) sont placées respectivement juste au-dessous de l'optique double (OA, OB).

4. Dispositif selon l'une des revendications précédentes, dans lequel le système d'optique double (OA, OB) est constitué d'un jeu de deux miroirs secondaires (1A, 1B) recevant chacun une image du sujet (S), renvoyant ces deux images sur un jeu de miroirs primaires (3A, 3B) en opposition au jeu de miroirs secondaires (1A, 1B) et renvoyant eux-mêmes ces deux images au travers d'une ou plusieurs lentilles (4A, 4B) sur une surface photosensible (6) permettant la mémorisation de ces deux images sous la forme d'une paire d'images en stéréophotogrammétrie.

5. Dispositif selon la revendication 4, dans lequel les deux images renvoyées par le système de miroirs primaires (3A, 3B) sont focalisées par un système de lentilles unique sur la surface photosensible (6).

6. Dispositif selon la revendication 4, dans lequel les deux images renvoyées par les miroirs primaires (3A, 3B) focalisent sur deux surfaces photosensibles différentes (6A, 6B).

7. Dispositif selon l'une des revendications 1 à 3, dans lequel le système d'optique double (OA, OB) est constitué par deux systèmes optiques distincts (7A, 7B) sans utilisation de miroirs pour la séparation des images et focalisant les images sur deux surfaces photosensibles différentes (6A, 6B).

8. Dispositif selon l'une des revendications 1 à 3, dans lequel le système d'optique double (OA, OB) est constitué par deux systèmes optiques distincts (7A, 7B) sans utilisation de miroirs pour la séparation des images, les deux systèmes optiques distincts (7A, 7B) focalisant les deux images sur une même surface photosensible (6).

9. Dispositif selon l'une des revendications 1 à 8, dans lequel les sources lumineuses virtuelles (2A, 2B) sont placées légèrement en retrait du système d'optique double (OA, OB) et écartées d'une distance légèrement supérieure à l'écartement des optiques (OA, OB) du système d'optique double de telle manière à ce que l'axe formé par la première source lumineuse virtuelle (2A) et la première optique (OA), et l'axe formé par la deuxième source lumineuse virtuelle (2B) et la deuxième optique (OB) convergent en un point situé à la distance attendue du sujet (S).

## Patentansprüche

1. Photographievorrichtung zum Rekonstruieren von Oberflächen in drei Dimensionen, ausgehend von einem Stereopaar von stereophotogrammetrischen Bildern eines Gegenstands (S), die Berechnungsmittel umfasst, die die Rekonstruktion von Oberflächen durch einen Suchlauf von Übereinstimmungspunkten zwischen jedem der zwei Bilder des Stereopaars erlaubt, und ein einmaliges Photographiegerät (5), ausgestattet mit einem doppelten, nicht polarisierten optischen System (OA, OB) und mit einer einmaligen Lichtquelle, von der das Licht durch einen Satz von der Lichtquelle gegenüberliegend angebrachten Primärspiegeln zurückgeschickt wird, das Licht auf einen Satz von dem Satz Primärspiegeln gegenüberliegend angebrachten Sekundärspiegeln zurückschickend und selbst das Licht zu dem Gegenstand (S) zurückschickend, somit zwei virtuelle Lichtquellen (2A, 2B) erzeugend, die den gleichen Abstand aufweisen wie die doppelte Optik und fluchtend mit dieser doppelten Optik auf eine Weise angebracht ist, dass eine erste der virtuellen Lichtquellen (2A) mit einer ersten der Optiken (OA) ausgerichtet ist, und dass eine zweite der Lichtquellen (2B) mit einer zweiten der Optiken (OB) hinsichtlich des Gegenstands (S) ausgerichtet ist, wobei die Berechnungsmittel konfiguriert sind, um unter vier möglichen Paarungslösungen für die Rekonstruktion eines spiegelnden Flecks die geometrische Position zu wählen, die dem Photographiegerät für eine konvexe Oberfläche am nächsten und für eine konkave Oberfläche am entferntesten ist, wobei die vier Lösungen Folgendes umfassen: das Paaren der durch die Optiken (OA) und (OB) gesehenen Reflexion der ersten virtuellen Lichtquelle (2A), das Paaren der durch die Optiken (OA) und (OB) gesehenen Reflexion der zweiten virtuellen Lichtquelle (2B), das Paaren eines durch die zweite Optik (OB) gesehenen Teils der Reflexion der ersten virtuellen Lichtquelle (2A) und des anderen, durch die erste Optik (OA) gesehenen, Teils der Reflexion der zweiten virtuellen Lichtquelle (2B), das Paaren eines von der ersten Optik (2A) gesehenen Teils der Reflexion der ersten virtuellen Lichtquelle (2A) und des anderen, von der zweiten Optik (OB) gesehenen, Teils der Reflexion der zweiten virtuellen Lichtquelle (2B).

2. Vorrichtung gemäß dem vorstehenden Anspruch, wobei die zwei virtuellen Lichtquellen (2A, 2B) jeweils genau über der doppelten Optik (OA, OB) angebracht sind.

3. Vorrichtung gemäß Anspruch 1, wobei die zwei virtuellen Lichtquellen (2A, 2B) jeweils genau unter der doppelten Optik (OA, OB) angebracht sind.

4. Vorrichtung gemäß einem der vorstehenden Ansprüche, wobei das doppelte optische System (OA, OB) aus einem Satz aus zwei Sekundärspiegeln (1A, 1B) besteht, von denen jeder ein Bild des Gegenstands (S) empfängt, diese zwei Bilder auf einen Satz von dem Satz von Sekundärspiegeln (1A, 1B) gegenüberliegend angebrachten Primärspiegeln (3A, 3B) zurückschickt und selbst diese zwei Bilder durch eine oder mehrere Linsen (4A, 4B) auf eine photosensible Oberfläche (6) zurückschickt, die das Speichern dieser zwei Bilder in der Form eines Paars von stereophotogrammetrischen Bildern erlaubt.

5. Vorrichtung gemäß Anspruch 4, wobei die zwei durch das Primärspiegelsystem (3A, 3B) zurückgeschickten Bilder durch ein einmaliges Linsensystem auf der photosensiblen Oberfläche (6) fokalisiert werden.

6. Vorrichtung gemäß Anspruch 4, wobei die zwei durch die Primärspiegel (3A, 3B) zurückgeschickten Bilder auf zwei verschiedenen photosensiblen Oberflächen (6A, 6B) fokalisieren.

7. Vorrichtung gemäß einem der Ansprüche 1 bis 3, wobei das doppelte optische System (OA, OB) aus zwei unterschiedlichen optischen Systemen (7A, 7B) besteht, ohne Verwendung von Spiegeln für die Trennung von Bildern, und die Bilder auf zwei verschiedenen photosensiblen Oberflächen (6A, 6B) fokalisiert werden.

8. Vorrichtung gemäß einem der Ansprüche 1 bis 3, wobei das doppelte optische System (OA, OB) aus zwei unterschiedlichen optischen Systemen (7A, 7B) besteht, ohne Verwendung von Spiegeln für die Trennung von Bildern, wobei die zwei unterschiedlichen optischen Systemen (7A, 7B) die zwei Bilder auf eine gleiche photosensible Oberfläche (6) fokalisiert werden.

9. Vorrichtung gemäß einem der Ansprüche 1 bis 8, wobei die virtuellen Lichtquellen (2A, 2B) vom doppelten optischen System (OA, OB) leicht zurückgesetzt angebracht sind und bezüglich des Abstands der Optiken (OA, OB) des Systems doppelter Optik mit einem leicht größeren Abstand auf eine Weise beabstandet sind, dass die durch die erste virtuelle Lichtquelle (2A) und die erste Optik (OA) gebildete Achse, und die durch die zweite virtuelle Lichtquelle (2B) und die zweite Optik gebildete Achse, zu einem Punkt konvergieren, der sich im erwarteten Abstand zum Gegenstand (S) befindet.

## Claims

1. Photographic device for reconstructing 3-dimensionnal surfaces from a stereophotogrammetry image pair of a subject (S), comprising:
a. Computation means configured to reconstruct surfaces by searching for corresponding points between the two images of the stereo pair, and
b. A unique camera body (5) equipped with:
i. A non-polarized double-optics system (OA, OB) and
ii. A unique light source whose light is reflected by a set of primary mirrors opposite to the light source and reflecting the light toward a set of secondary mirrors opposite to the primary mirrors and reflecting themselves the light toward the subject (S), hence creating two virtual light sources (2A, 2B) having the same spreading than the double-optics and aligned with this double-optics such that one of the two virtual light sources (2A) is aligned with a first optics (OA) and a second of the light sources (2B) is aligned with a second optics (OB) relative to subject (S),
the computation means being configured to select amongst four possible pairing solutions for reconstructing a specular spot the geometrical position the closest to the camera body for a convex surface and the farthest for a concave surface, with the four solutions being: the paring of the reflection of the first virtual light source (2A) as seen by the optics (OA) and (OB), the paring of the reflection of the second virtual light source (2B) as seen by optics (OA) and (OB), the pairing of on one side the reflection of the first virtual light source (2A) as seen by the second optics (OB) and on the other side the reflection of the second virtual light source (2B) as seen by the first optics (OA), the pairing of on one side the reflection of the first virtual light source (2A) as seen by the first optics (OA) and on the other side the reflection of the second virtual light source (2B) as seen by the second optics (OB).

2. Device according to the preceding claim, wherein the two virtual light sources (2A, 2B) are placed respectively just above the double-optics (OA, OB).

3. Device according to claim 1, wherein the two virtual light sources (2A, 2B) are placed respectively just below the double-optics (OA, OB).

4. Device according to any of the preceding claims, wherein the double-optics system is composed of a set of two secondary mirrors (1A, 1B), each receiving an image of the subject (S), reflecting these two images toward a set of primary mirrors (3A, 3B) opposite to the set of secondary mirrors (1A, 1B), themselves reflecting these two images through one or several lenses (4A, 4B) on a photosensitive surface (6) enabling the recording of these two images as a stereo pair for stereophotogrammetry.

5. Device according to claim 4, wherein the two images reflected by the set of primary mirrors (3A, 3B) are focalized via a unique set of lenses onto a photosensitive surface (6).

6. Device according to claim 4, wherein the two images reflected by the set of primary mirrors (3A, 3B) are focalized on two distinct photosensitive surfaces (6A, 6B).

7. Device according to any of the claims 1 to 3, wherein the double-optics system (OA, OB) is constituted of two distinct optics systems (7A, 7B) without using mirrors to separate the images and focusing the images on two distinct photosensitive surfaces (6A, 6B).

8. Device according to any of the claims 1 to 3, wherein the double-optics system (OA, OB) is constituted of two distinct optics systems (7A, 7B) without using mirrors to separate the images, the two distinct optics systems (7A, 7B) focusing the two images on the same photosensitive surface (6).

9. Device according to any of the claims 1 to 8, wherein the virtual light sources (2A, 2B) are placed slightly behind the double-optics system (OA, OB) and separated from each other of a distance slightly larger than the one between the optics (OA, OB) of the double-optics system such that the axis defined by the first virtual light source (2A) and the first optics (OA), and the axis defined by the second virtual light source (2B) and the second optics (OB) are converging to a point placed at the expected distance of the subject (S).
